# EUROPEAN PATENT APPLICATION

(11) **EP 2 105 487 A2**
(43) Date of publication of application: **30.09.2009**
(21) Application number: 07870641.3
(22) Date of filing: 25.12.2007
(51) Int. Cl.: C10G 1/10, C10B 53/07

(54) **METHOD FOR PRODUCING CARBON BLACK FROM RUBBER-CONTAINING WASTE& xA;**

(30) Priority: 27.12.2006 RU 2006146634
(71) Applicant: Obschestvo s Ogranichennoy Otvetstvennostyu "N.T.D Tamanno", Moscow, 105118 (RU)
(72) Inventor: BOCHAVER, Kirill Zyskovich, Moscow, 111250 (RU)
(74) Representative: Glawe, Delfs, Moll
(86) International application number: PCT/RU2007/000728
(87) International publication number: WO 2008/079054

(57) **Abstract**

The inventive method consists in carrying out a rubber crumb thermolysis in a fluidized layer in the vertical flow of a supercritical hydrocarbon alkylaromatics-containing gas. The rubber crumb thermolysis is carried out in a reactor at a mass ratio between a solvent and residues less than 0.1. The solvent is also used in the form of a fluidizing agent, a heat carrier and a entrainer for removing reaction products from the reactor, thereby enabling the solvent to flow in such a way that all the products produced by the rubber crumb thermolysis are totally removed from the reactor in the common stream with the solvent.

## Description

### Field of the Invention

This invention relates to the chemical industry and to recycling of rubber-containing industrial and household waste, e.g., worn-out tires.

### Background Art

Production is carried out primarily by thermolysis of rubber crumb in a supercritical hydrocarbon gas. After thermolysis of rubber a carbon black, which is close by its composition to that used in the rubber production, a wide fraction of hydrocarbons and a small quantity of a hydrocarbon gas are obtained.

Disposal of rubber-containing waste (primarily tires) is a very actual modem problem. At the same time products may be obtained, which are substitutes of oil and gas raw stock derivatives.

Obtained products may be used both directly and after processing - refining.

A method is known, which consists of recycling of rubber-containing waste for producing engine fuel and chemical raw stock by thermal fluidization (thermolysis) of waste in a hydrocarbon solvent, which is a by-product of the synthetic rubber production, at a pressure ranging from 1 to 6 MPa, a temperature from 270 to 420°C and a solvent-waste ratio 2 - 4 : 1. (WO 95/200007, C 08 J 11/20, publ. 27.07.95).

A method for recycling organic polymer waste is known, which includes thermolysis of a solvent, namely, alkyl benzene, at a pressure not lower than 6.1 MPa, a temperature at least 210°C and a solvent-waste mass ratio from 1:1 to 4.2:1. (RU, No. 2167168, C 08 J 11/04, publ. 20.05.2001)

Furthermore, this technical solution allows addition of a thermolysis-product distillate fraction having a boiling temperature above 210°C.

A method for recycling organic polymer waste in an organic solvent, namely alkyl benzene, at a temperature above 270-420°C and a pressure up to 6 MPa and at a solvent-waste mass ration 2 - 4 : 1 in the presence of a rare-earth metal is known also (RU, No. 2110535, C 08 J 11/04, publ. 10.05.1998).

All the above inventions have one common disadvantage - an extremely large volume of a high-pressure reactor.

Thus, at a bulk density of rubber waste app. 400 kg/m³, a density of rubber itself app. 1200 kg/m³ and the alkyl benzene (e.g., toluene) 100 kg/m³, and taking that the reactor volume is filled with waste, the solvent-waste ratio will be 0.2.

At the ratio of 1:1 (and in all the known technical solutions the solvent-waste minimum weight ration is 1) a reactor volume occupied by waste, taking a contact time about two hours, will be equal to 10%, and at the ratio of 4:1 - 2.5%, respectively.

Or, if a plant capacity is 1 ton/hour, which is equal to 2.5 m³/hour, a reactor volume will reach 100 m³ and at a given temperature and pressure a reactor weight will be equal to 40 - 300 tons, which would be hardly acceptable for a small-capacity plant.

Moreover, every invention out of the above-said has its own disadvantages, i.e., difficulties with obtaining waste from the synthetic rubber production in one case, a high pressure (more than 6.1 MPa) in the second case, valuable rare earth-metal impurities in technical carbon in the third case, the use of a heavy fraction (the boiling temperature above 220°C) as the solvent in the fourth case (which will lead to the increased coke formation and poorer properties of the industrial carbon (IC) and carburization of production apparatuses).

The authors of all the above methods directly or indirectly provide for their carrying out in batch-operation plants, and this makes them practically infeasible due to difficulties arising when feeding raw stock in a reactor and removing reaction products because of high pressures and temperatures.

The closest to the claimed method is the one for recycling rubber-containing waste in an organic solvent at the temperature of 435°C and a pressure ranging from 2.9 to 6 MPa, separating a liquid fraction from the non-dissolved product, distilling the liquid fraction into two fractions: one having a boiling point up to 220°C, which is a light hydrocarbon fraction (LHF), and the other one having the boiling point above 220°C. The solvent-waste ratio is within the limits from 1 to 3.0. A fraction part having the boiling point up to 220°C is subjected to catalytic reforming and is used as a solvent. (RU, No. 2220986, C 08 J 11/04, C 08 L 21/00, publ. 10.01.2004).

It is proposed to carry out the method either in a batch-operation plant or in a plant with a fluidized bed (FB) of rubber crumb and solid thermolysis products, namely, technical carbon in a flow of fluidizing agent-solvent in a continuous-operation plant.

Where the products are obtained as follows:
II - liquid heavy hydrocarbons having boiling temperatures above 220°C are removed together with the remainder of metal cord;
III - industrial carbon powder is removed from the upper layer of a FB reactor by pneumatic transport;
IV - a gas-steam fraction of light hydrocarbons having a temperature up to 220°C is removed from the separation part of the reactor, is cooled and partly condensed in a cooler-condenser and is subjected to separation in a gas-liquid separator.

The fraction of liquid light hydrocarbons is fed into a fire tubular furnace and then to a reforming reactor having the temperature of 500°C and to the main reactor.

The remaining part of LFU is stabilized in a column.

Proceeding from the precondition that batch-operation plants are undesirable, we have considered a continuous-operation plant only.

The stated technical effects of the known invention:
- a simplified technology, low power consumption, reduced operation costs, extended functional capabilities, improved quality of products obtained;
- accelerated thermolysis of rubber;
- increased concentrations of alkyl benzenes in a solvent due to catalytic reforming of the solvent - vapors of thermolysis light fraction.

Disadvantages of this method may include:
- the problem of separating hydrocarbons, i.e., a mixture of a solvent and reaction products, into a heavy fraction and a light fraction in a continuous-operation fluidized-bed reactor, and, consequently, the problem of removing a heavy fraction from the reactor bottom;
- separation of industrial carbon (IC) and a light hydrocarbon fraction in the main reactor, because this technique significantly increases a reactor volume at a high pressure during thermolysis, which leads to a significant increase in a reactor weight;
- condensation of reaction products in a condenser immediately after they are removed from a reactor, and feeding a liquid into a rectifying column, which requires communicating additional heat to the column, and, consequently, a growth in total power costs;
- use a light fraction condensate from a reactor containing heavy hydrocarbons as a solvent, which results in compaction processes in a reforming reactor, a thermolysis reactor and a furnace, and in their clogging with heavy compaction products and coke.

It is unpractical to locate a cyclone within a reactor, since it contains a supercritical gas under high pressure and temperature, which adversely affects the level of cleaning IC from solid particles as well as results in increasing the reactor separation zone and weight.
Moreover, reaction products stay in a reactor for a longer time, which results in an undesirable effect of secondary reactions.

### Summary of the Invention

The objective of the invention is to improve the method performance characteristics. The claimed invention eliminates the above disadvantages of the known method (RU, No. 2220986) due to:
- liquidating a separation zone in a thermolysis reactor and a separating apparatus for gaseous and solid reaction products outside a reactor for the purpose of providing the possibility for the solvent-rubber ratio being less than 1;
- installing a throttling device between a reactor and a separating device for the purpose of lowering pressure in the latter and, thus, improving separation conditions;
- returning a purge vapor-gas mixture from a purge vapor-gas column to a stream of pyrolysis products coming to the feed opening of a rectifying column, which simplifies the plant layout and improves rectification conditions;
- all liquid and gaseous reaction products and a circulating solvent flow are separated in a rectifying column, to which vapor-gas raw stock is fed, which has enabled to exclude external heat feeding for steaming a bottom product as well as has provided the possibility of varying the quantity and composition of product fractions;
- a distillate from a rectifying column is used as the circulating solvent, which has provided the possibility of selecting the solvent composition;
- the reactor design providing for feeding a part of heat for heating rubber crumb and the total heat of thermolysis reactions has enabled to lower the heat-transfer agent temperature to 450°C or lower when it contacts rubber crumb, and to exclude compaction and coking of heavy hydrocarbons;
- removing all reaction products from a reactor together with a solvent through one fitting, and their subsequent separation in cyclones and a rectifying column;
- using a solvent as a fluidizing agent, a heat-transfer agent and a remover of all reaction products in one stream.
The above-said benefits as well as specific features of this invention will be further explained by its preferred embodiment with reference to the appended drawings.

### Brief Description of the Drawings

Fig. 1 shows a block-scheme of industrial carbon production, hydrocarbon fuel components and raw stock for the chemical industry;

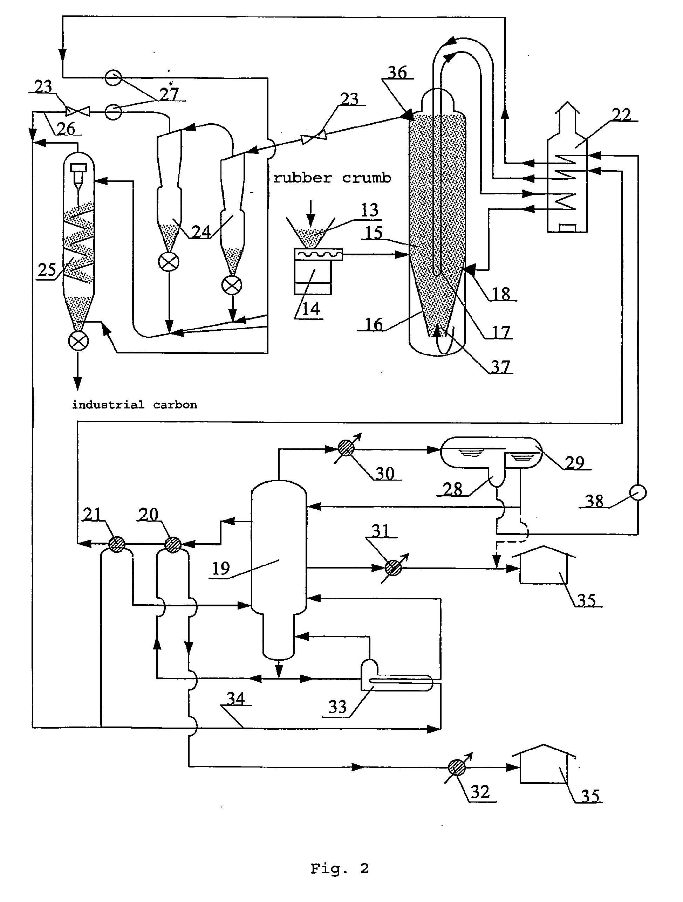

Fig. 2 shows a plant for rubber crumb thermolysis.

### Description of a Preferred Embodiment

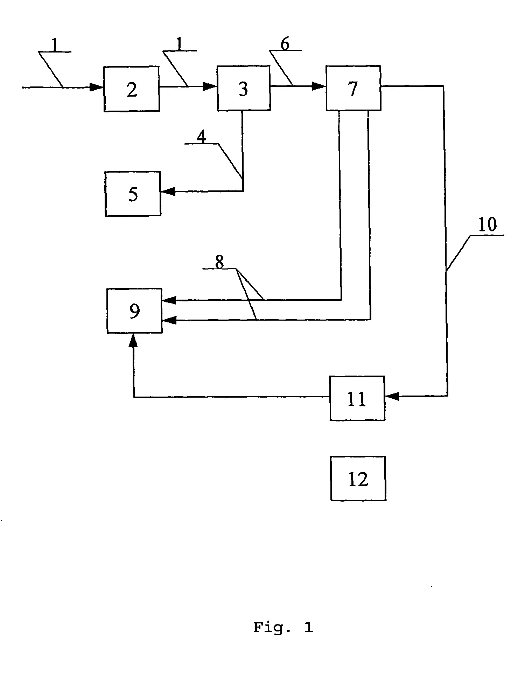

Numbers on Fig. 1 refer to the following items:
1-rubber-containing raw stock;
2-section for receiving storing and preparing raw stock;
3-section for grinding raw stock and separating fragments after grinding;
4-metal fragments after grinding;
5-section for stockpiling, pressing, packing and shipping commercial products;
6-rubber crumb;
7-plant for rubber crumb thermolysis;
8-liquid thermolysis products;
9-tank farm;
10-industrial carbon (IC);
11-section for refining industrial carbon;
12-general plant facilities.

Rubber-containing raw stock 1, comprising worn-out tires, electric cables, rubber articles production waste, household waste, etc., comes to the section 2 for receiving, storing and preparing raw stock and then to the section 3 for grinding raw stock and separating fragments after grinding.

Metal fragments 4 after grinding, all types of cords, metal wires, etc. are transferred to the section 5 for stockpiling, pressing, packing and shipping commercial products. Rubber crumb 6 is fed to the plant 7 for rubber crumb thermolysis.

Liquid thermolysis products 8 are transferred by pipelines to the tank farm 9 for subsequent sale, and industrial carbon 10 is cooled and, if necessary, refined in the section 11 for refining industrial carbon and is also fed to the storage section 5.

The production line includes necessary general plant facilities 12, namely, a cooling tower, a recycling water system, a power sub-station, an inert-gas (e.g., nitrogen) generator, a steam generator, etc.

Numbers on Fig. 1 refer to the following items:
13 - receiving bin;
14 - screw extruder;
15 - thermolysis reactor having a fluidized bed (FB) of rubber crumb (RC) and industrial carbon (IC);
16 - tapered distribution device;
17 - coil for heating FB by direct flow of solvent-heat-transfer agent;
18 - fitting for feeding a solvent into an area between the housing of the reactor 15 and distribution device 16;
19 - rectifying column;
20 and 21 - heat-exchanger;
22 - fire tubular furnace;
23 - throttling devices;
24 - cyclones;
25 - steam-stripping column;
26 - pipeline for hydrocarbon gas flow from cyclones 24;
27 - canted filters for fine cleaning of gas from IC dust;
28 - H₂O condensate bottom;
29 - three-phase separator;
30 - reflux condenser;
31 and 32 - coolers for commercial products;
33 - reboiler with steam space;
34 - pipeline for a part of reaction products flow fed to the reboiler;
35 - general plant facilities, warehouses, tank farm, inert-gas generator, etc.;
36 - fitting for removing reaction products from the reactor;
37 - nozzle;
38 - steam generator.

Rubber crumb from the rubber (tires) grinding line is fed by a transporter to the feeding bin 13 of the screw extruder 14 which forces rubber crumb to the reactor 15 being a cylindrical vessel with a fluidized bed of rubber crumb and industrial carbon, which bottom portion is provided with the tapered distribution device 16 having the nozzle 37. The supercritical hydrocarbon gas pressure in the reactor is about 4 MPa.

The coil 17 is arranged within the reactor 15. A heat-transfer agent is fed through the fitting 18 into a cavity between the shell of the reactor 15 and the tapered distribution device 16. A fluidized bed in the reactor 15 ensures a high heat-transfer coefficient from a heat-transfer agent to rubber crumb.

A fluidizing agent - heat-transfer agent-solvent - is taken from the rectifying column 19, heated in the heat-exchangers 20 and 21 by counter-flows of thermolysis products and a heavy bottom product from the rectifying column 19.

Then, the heat-transfer agent is heated in the furnace 22 and fed to the coil 17 of the reactor 15, where the thermolysis temperature is maintained at the level of 320-350°C by heat-transfer through the walls of the coil 17, after which the solvent is returned to the furnace 22 for additional heating and is fed to the reactor 15 through the fitting 18 and then through the nozzle 37 for heating continuously fed rubber crumb up to a temperature ranging from 320°C to 350°C through the walls of the tapered distribution device 16 and through direct contact with it.

Reaction products are removed from the reactor 15 through the fitting 36, throttled to a pressure from 0.7 to 0.4 MPa in the throttling device 23; then industrial carbon is separated from a hydrocarbon gas in several consecutive stages of the cyclones 24 and is fed to the steam-stripping column 25, where remaining hydrocarbons are removed from industrial carbon by superheated water steam. This steam is also used for transporting industrial carbon from the cyclones 24 to the steam-stripping column 25 through pipelines.

Thus, the solvent performs the functions of a fluidizing agent, a heat-transfer agent and a remover of all thermolysis products from the reactor simultaneously.

Purge gases from the steam-stripping column 25 are added to the main gas flow going from the cyclones 24 in the pipeline 26. Then the gas is finally cleaned from dust in the fine cleaning filter 27, which is regularly cleaned by superheated water steam, and is fed in two flows as raw stock to the rectifying column 19. The main gas flow is cooled in the heat-exchanger 21 with heat recovery to the direct flow of the heat-transfer agent and after this it is fed to the column 19. The other gas flow going through the pipeline 34 transfers part of its heat in the reboiler 34, and after this it is also fed to the rectifying column 19.

The rectifying column 19 is used for separating gas raw stock into a gas, a light fraction of liquid hydrocarbons, a heavy fraction of liquid hydrocarbons and, individually, a distillate, which is used as a solvent. Non-condensed gas from the dome 15 of the column 19 is cooled and condensed in the reflux condenser 30, after which it is separated in the three-phase separator 29 into a hydrocarbon gas, liquid light hydrocarbons and H₂O condensate. H₂O condensate from the bottom 28 of the three-phase separator 29 is evaporated in the steam generator 26 and overheated in the furnace 22 to the temperature about 450°C.

The hydrocarbon gas from the separator 29 is used for combustion in the furnace 22. The liquid light product is fed to the upper plate of the rectifying column 19 as a reflux. A part of the liquid light product may be taken as a light gasoline having a boiling temperature below 70°C and transported to the product warehouse 35. Commercial hydrocarbon fraction having a boiling temperature below 200°C is taken from the middle of the column 19 and is also fed to the warehouse 35 through the cooler 31.

The distillate-solvent from the column 19 is fed for recycling by sequentially heating it in the heat-exchangers 20, 21 and the furnace 22.

A heavy hydrocarbon product having a boiling temperature above 200°C is taken from the bottom of the column 19 and is sequentially cooled down in the heat-exchanger 20 and the cooler 32, after which it is transported to the warehouse 25.

Heat of a part of the counter-flow going through the pipeline 34 is used in the evaporator-reboiler 33 for a bottom product.

By varying points of taking products from the column 19, it is possible to vary rectified products, e.g., by changing the solvent composition or by additionally taking a 180-360°C fraction.

In order to exclude passage of air into the reactor together with rubber crumb, an inert gas, e.g., nitrogen, is fed to the bin 13.

Thus, all functional liquid, gaseous and solid products obtained after the rubber crumb thermolysis as well as functional intermediate products, including shipping commercial products, are in hermetically sealed spaces and do not have a direct contact with the environment, and the plant will be ecologically safe.

A significant advantage of the proposed production line is the absence of waste (except for furnace flue gases) and the complete recycling of waste.

The method of rubber crumb thermolysis was realized at a demonstration pilot plant to the full scale at a capacity up to 10 kilos of rubber crumb per hour (with the exception that an electroheating furnace was used instead of the above fire tubular furnace and a gravitational separator was used instead of the above-said cyclone). During long operation run the demonstration plant showed operability of both the method on the whole and individual devices and machinery within the thermolysis parameters stated in this application.

The organic solvent-rubber crumb weight ratio was varied from 0.2 to 0.34, the temperature of the RC and IC fluidized bed in the reactor 15 was varied in the range from 320°C to 420°C, the pressure in the gravitational separator was varied from 0.1 to 1 MPa, the weight ratio between the circulated solvent and the processed rubber crumb was from 2 to 8.

Depending on the process parameters (amount of recirculating solvent, reactor temperature, solvent composition, etc.), the thermolysis products output varied within the following limits:
- the hydrocarbon gas - from 0.3 to 0.8% on the basis of raw stock - rubber crumb;
- the light fraction of hydrocarbons having the boiling temperature in the range from 40 to 70°C - from 0 to 8%;
- the light fraction of hydrocarbons having the boiling temperature in the range from 40°C to 200°C - from 26 to 42%;
- the heavy fraction of hydrocarbons having the boiling temperature in the range from 180°C to 410°C - from 25 to 44%.

The concentration of alkyl aromatic hydrocarbons C6-C8 varied within the limits from 40 to 70%. The pressure in the reactor 15 was continuously maintained at the level of 4.0 ± 0.2 MPa.

Rubber crumb having particle size up to 4 millimeters was used as raw stock.

Within the said limits of the process parameters the rubber crumb thermolysis was stable.

### Industrial Applicability

The claimed method for producing industrial carbon, hydrocarbon fuel components and raw stock for the chemical industry may be most successfully applied in the field of chemical recycling of rubber-containing waste, e.g., worn-out tires.

## Claims

1. A method for producing industrial carbon, hydrocarbon fuel components and raw stock for chemical industry, comprising grinding rubber-containing raw stock, separating rubber crumb from other ingredients, feeding rubber crumb into a fluidized-bed reactor, carrying out rubber crumb thermolysis in a vertical flow of a solvent being a mixture of hydrocarbons, wherein said mixture comprises alkyl aromatics, at a temperature and a pressure close to critical ones 320-350°C and 4.0-6.0 MPa, and circulates through said moving fluidized bed, **characterized in that** said thermolysis is carried out at a solvent-waste weight ratio less than 1.0 in a reactor, said solvent performing functions of a fluidizing agent and a heat-transfer agent and a remover of reaction products from said reactor simultaneously, which ensures circulation of said solvent and full removal of all products obtained by rubber crumb thermolysis from said reactor in a common flow with said solvent.

2. A method according to Claim 1, **characterized in that** industrial carbon is separated from gaseous reaction products in cyclones arranged separately at a pressure from 0.3 to 0.8 MPa, which is less than thermolysis pressure, wherein such pressure is achieved by using a throttling device arranged on a pipeline between said reactor and said cyclones, which device adjusts pressure in said reactor.

3. A method according to Claim 1, **characterized in that** for the purpose of lowering temperature of said circulating solvent at its direct contact with rubber crumb and of excluding compaction and coking of heavy hydrocarbons in thermolysis products said circulating solvent is twice heated in a furnace, and a part of heat is transferred by said rubber crumb directly into said fluidized bed and another part is transferred through a reactor coil surface and through a wall of a reactor tapered distribution device, which are arranged in said fluidized bed.

4. A method according to Claim 1, **characterized in that** a supercritical gas of said solvent and said reaction products is additionally fed first into a heat exchanger and a reboiler for recovering heat to said direct flow of said heat-transfer agent-solvent and for evaporating hydrocarbons in the bottom of a rectifying column and then is fed into said rectifying column as gaseous raw stock.

5. A method according to Claim 1, **characterized in** said rubber crumb is fed into said reactor by a screw extruder from a receiving bin in the atmosphere of an inert gas fed directly to said receiving bin.
